Europäisches Patentamt

European Patent Office

Office européen des brevets

(19)

(11) Publication number: **0 035 076**
**B1**

(12)

# EUROPEAN PATENT SPECIFICATION

(45) Date of publication of patent specification: **11.05.83**

(51) Int. Cl.³: **C 09 D 17/00, C 09 C 1/36**

(21) Application number: **80300632.9**

(22) Date of filing: **03.03.80**

(54) **High dry hide TiO2 slurries.**

(43) Date of publication of application:
**09.09.81 Bulletin 81/36**

(45) Publication of the grant of the patent:
**11.05.83 Bulletin 83/19**

(84) Designated Contracting States:
**BE DE FR GB IT NL**

(56) References cited:
**US - A - 4 097 301**
**US - A - 4 170 485**

(73) Proprietor: **AMERICAN CYANAMID COMPANY**
**Berdan Avenue**
**Wayne New Jersey 06904 (US)**

(72) Inventor: **Blake, David Willson**
**1202 Noble Oaks Drive**
**Savannah Georgia 31406 (US)**
Inventor: **Delgado, Alberto Wolter**
**14 South Cromwell Road**
**Savannah Georgia (US)**
Inventor: **Sheehan, Gerard Martin**
**102 Biltmore Road**
**Savannah Georgia (US)**

(74) Representative: **Allam, Peter Clerk et al,**
**LLOYD WISE, TREGEAR & CO. Norman House**
**105-109 Strand**
**London WC2R 0AE (GB)**

Courier Press, Leamington Spa, England.

This invention relates to titanium dioxide slurries of high solids content which are prepared wholly or in part from in-process material from either the sulfate or the chloride process for making TiO$_2$, which in-process material has not been dried or dry-milled and has a low amount of an aluminum oxide coating. The resultant slurries have excellent resistance to hard settling, good viscosity stability after slurry aging, and paint optical properties at least equal to those of conventional high dry hide slurries made entirely with conventionally prepared titanium dioxide pigments.

Titanium dioxide is at present the premier white pigment of commerce. It is generally produced by either hydrolyzing an aqueous solution of a titanium salt, such as a sulfate, and calcining the hydrolysate at 750—1000°C., or oxidizing a titanium halide, e.g, titanium tetrachloride, at elevated temperatures of 800°C. or higher, followed by cooling to a temperature below 600°C. The product resulting from the calcination or oxidation contains a substantial amount of oversized, gritty TiO$_2$ particles which are broken up by either wet or dry grinding. Drying, following the wet grinding, frequently causes cementation of agglomerates requiring a further milling treatment before a smooth textured pigment product can be obtained. In the dry milling operation, suspending agents and dispersing aids are often introduced during the milling to facilitate the reduction of the pigment to fine, uniform-sized particles. An effective means for dry milling is a fluid energy mill in which the pigment particles are conveyed by a gaseous fluid, such as air or steam, into the outer portion of an inwardly spiraling vortex at high velocity and in a manner which will maintain the vortex at a high rotative speed and relatively low inward speed whereby the pigment aggregates may be fractured.

Previously, titanium dioxide slurries were prepared by placing the dry finished pigment in water with an appropriate dispersant. U.S. Patent 3,536,510 describes high solids content anatase slurries in which dry milled anatase TiO$_2$ is dispersed in water using appropriate dispersants, preferably alkanolamines. U.S. Patent 3,758,322 describes high solids slurries in which grit-free deflocculated, non-hydrous oxide treated TiO$_2$ is used to make rutile slurries, using an appropriate dispersant. German Patent 1,908,611 relates to high solids content rutile TiO$_2$ water mixtures using finished rutile TiO$_2$-water mixtures dispersed with sodium polyphosphates.

U.S. Patent 4,170,485 describes high solids content titanium dioxide slurries of improved gloss prepared from thickener underflow material which preferably has associated with it a small amount of a color stabilizer, which may be alumina. The thickener underflow which is used as the source of titanium dioxide is the bottom product from a dry milling step carried out in a fluid energy mill micronizer, that is to say the particles which are considered to be too fine to be packed as a dry pigment.

U.S. Patent 4,097,301 describes the addition of small amounts of sodium aluminate or aluminum trichloride to slurries of anatase titanium dioxide obtained by combining water with the anatase product as formed in an oxidation reactor by the oxidation of titanium tetrachloride, for the purpose of stabilizing the slurries against thickening. The stabilized slurries are then more readily processed into pigments as by calcination followed by dry milling.

It has now been discovered that high dry hide titanium dioxide slurries may be prepared from in-process material, i.e. that which has not been dried and dry-milled, if it is coated with low amounts of aluminum oxide. This material may be used either alone or in combination with conventionally prepared, dried and dry-milled pigment to produce the slurries of the present invention.

The starting titanium dioxide material for use in the present invention may be obtained by either the combustion of titaniferous salts (the "chloride process") or by the hydrolysis of a titanium iron sulfate solution (the "sulfate process"). Preferably, the combustion or calcination, depending upon the process, is performed in the presence of an aluminum salt such as aluminum chloride such as to "burn in" up to 2% by weight aluminum oxide into the titanium dioxide. This material exits the reactor or calciner and is mixed with water to form a raw slurry having about 15—30% by weight solids which contains a substantial amount of oversized gritty TiO$_2$ particles which are then broken up by wet-grinding in such as sand mills. The slurry is then hydro-classified by passing it through a 325 mesh (U.S. Standard) screen. Preferably, a vibratory double deck screen is used. It is this material passing through the screen (hereinafter referred to as the "fines") that is used to make the high dry hide slurries of the present invention, that is to say material which has not been dried and dry-milled.

The fines, which are still in slurry form, are then coated with 0.3 to 3% by weight of hydrous aluminum oxide. If the aluminum oxide is used in less than 0.3% there is difficulty in filtration to subsequently obtain a solids content in the desired 55 to 70% by weight range. If more than 3% is used, then the water retained makes it difficult to subsequently reach the desired 55 to 70% by weight solids in the filter cake. Generally, the aluminum oxide is added in the form of a salt such as sodium aluminate or related compounds. This coating step, generally with larger amounts of hydrous oxide, is well known in the titanium dioxide industry and may be performed in known manners.

The resultant low-aluminum oxide-coated titanium dioxide slurry is then made into a high dry hide, high solids content slurry by increasing the solids content to the desired 55 to 70% by weight, preferably 60—65%, and most preferably 62—64%. Generally, this is done by filtration or in a rotary evaporator with the addition of small amounts of standard organic dispersants for titanium dioxide. The dispersants are used in effective amounts, generally 0.3 to 2% by weight.

Alternatively and/or additionally, the solids content may be increased by the addition of dry-finished (i.e. dried and dry-milled) titanium dioxide pigment which has a heavy hydrous oxide coating, e.g. 12 to 15% by weight. When dry finished pigment is used, it should be 0 to 90% by weight of the solids of the slurry, preferably 0 to 60%, and most preferably 20 to 55%.

Dispersants found especially useful herein are organic polyelectrolytes and others such as 2-amino-2-methyl-1-propanol, triethanolamine, sorbitol, mannitol, and water soluble salts. For example, sodium salts of polymeric carboxylic acids, such as Tamol® 731 and Tamol® 850, solid by Rohm & Haas; Daxad® 30, sold by W. R. Grace; Nopcosant® K, sold by the Nopco Division of Diamond-Shamrock Corporation; Polywet® ND—1 and ND—2 of Uniroyal, Inc. and Cyanamer® P—35 of American Cyanamid Co., have been used.

The following examples are presented to further illustrate the present invention:

Example 1
Preparation of low $Al_2O_3$ treated $TiO_2$ slurry

Titanium dioxide pigment was prepared by the chloride process of combustion of titanium tetrachloride through the hydro-classification step. The slurry material passing through a 325 mesh U.S. standard sieve was found to have about 30% by weight solids. It was placed in a vessel and the pH raised to about 9.2 with sodium hydroxide. After heating to about 70°C., sodium aluminate in a 1:1 mixture with water was added to provide about 0.8% $Al_2O_3$ based upon the dry weight of $TiO_2$, and allowed to age for about 30 minutes. The pH was then adjusted to 7.0±0.2 by the addition of 20% sulfuric acid, and the coated slurry aged for about 2 hours.

The slurry was then filtered and the filter cake washed with hot water. At this point the filter cake had a solids content of about 50%.

The filter cake was reslurried by agitation and the addition of 0.63% by weight based on the dry weight of $TiO_2$ in the filter cake of 2-amino-2-methyl-1-propanol (AMP). Dry finished pigment (flat latex type having about 14% hydrous oxide coating) was then added to increase the solids content to 64% by weight. A thixotrope (Attage 1®—50) and a bacteriocide (Vancide® TH) were added at the rates of 0.62 and 0.5% by weight, respectively, based upon the total slurry. This finished high solids, low aluminum oxide coated slurry was then processed through a 200 mesh Newark wire cloth sieve to break up and/or remove any $TiO_2$ agglomerates.

The resultant slurry had the following composition:

| | % of Total slurry |
|---|---|
| Reslurried filter cake | 65.4 |
| Dry $TiO_2$ | 33.3 |
| Dispersant | 0.63 |
| Thixotrope | 0.62 |
| Bacteriocide | 0.05 |

Examples 2—4
The procedure of Example 1 was repeated to prepare slurries having the compositions as shown in Table I below. Each of the reslurried filter cakes was coated with 0.6% $Al_2O_3$.

TABLE I

| | 2 | 3 | 4 |
|---|---|---|---|
| Reslurried filter cake | 55.2 | 55.2 | 55.2 |
| Dry $TiO_2$ | 43.7 | 43.8 | 43.7 |
| Dispersant | | | |
|   AMP[1] | 0.26 | - - - - | 0.26 |
|   TSPP[2] | 0.17 | 0.32 | - - - - |
|   P—35[3] | - - - - | - - - - | 0.17 |
| Thixotrope | 0.67 | 0.63 | 0.67 |
| Bacteriocide | | 0.05 | - - - - |

1) AMP is 2-amino-2-methyl-1-propanol
2) TSPP is tetrasodium pyrophosphate
3) P—35 is a sodium salt of a polyacrylic acid.

Example 5
The procedure of Example 1 was repeated except that 0.6% $Al_2O_3$ was added to the fines slurry, the slurry was increased to 66% by weight solids by means of a thin film rotary evaporator and 0.3% AMP dispersant was used to maintain the slurry in a deflocculated state. No dry finished titanium dioxide pigment was added to the slurry.

Example 6
To determine the tinting strength of each of the above slurries, as compared to a conventionally prepared slurry from dry finished pigment having a 7.5% $Al_2O_3$ and 6.5% $SiO_2$ coating, each was made into a paint using a typical acrylic latex paint formulation. Each paint was based upon a polyacrylic latex (Rhoplex AC—490 of Rohm & Haas Co.) and contained other conventional ingredients together with one of the slurries above.

Each of the resultant paints was then tested for tinting strength by combining 200 g. of each paint with 16 g. of dilute chromium oxide green pigment, shaking the mixtures, allowing them to age overnight, forming drawdowns on Morest 017 charts using a 6"×0.003" Bird film applicator, and allowing the drawdowns to age overnight before evaluation.

The relative tinting strength of the paints was determined by measuring the green reflectance of the standard (conventionally prepared slurry) and the test sample over the white portion of the chart. The resultant reflectance values are converted into K/S values by the Kubelka—Munk equation. The tinting strength of the sample being tested is then determined by the formula:

$$\text{Tinting Strength sample} = \frac{\text{K/S standard}}{\text{K/S sample}} \times 100$$

The results for the paints made from the slurries of Examples 1—5, as compared to the standard, were as follows:

| Sample | Tinting strength |
|--------|------------------|
| Standard | - - - - |
| Ex. 1 | +2% |
| Ex. 2 | equal |
| Ex. 3 | +4% |
| Ex. 4 | +2% |
| Ex. 5 | +2% |

Accordingly, paints having equivalent or better tinting strength are obtained from the slurries of the present invention while eliminating or decreasing the need for the expensive and energy-intensive steps of drying and fluid-energy milling a highly coated titanium dioxide pigment.

Example 7

The procedure of Example 1 was repeated to prepare a titanium dioxide pigment slurry except that prior to the combustion of the titanium tetrachloride aluminum, chloride was added such that 1.2% by weight aluminum oxide, based on the weight of resultant titanium dioxide, was "burned in" the pigment. The remainder of Example 1 was performed on this material including the sodium aluminate addition.

The tinting strength of the resultant slurry was evaluated according to the procedure of Example 6, in comparison with a conventionally prepared slurry.

The results were:

| Sample | Tinting strength |
|--------|------------------|
| Standard | - - - - |
| Ex. 7 | +7% |

This example shows the further beneficial effects in the present invention from the use of a base titanium dioxide which was formed in the presence of low amounts of aluminum oxide.

## Claims

1. In an aqueous titanium dioxide pigment slurry having high hiding power, a solids content of 55 to 70 percent by weight, and an effective amount of a dispersing agent, the improvement comprising using as the source of the titanium dioxide fines which pass through a 325 mesh screen and are coated with 0.3 to 3 percent by weight of hydrous aluminum oxide, said fines having been obtained by wet-grinding, followed by hydroclassification of the wet-ground material without drying or dry-milling thereof.

2. The slurry of Claim 1, wherein up to 60 percent of the fines is replaced by dried and dry-milled titanium dioxide pigment.

3. The slurry of Claim 1 or Claim 2, wherein the fines are formed by the combustion of titaniferous salts.

4. The slurry of Claim 3, wherein the combustion of titaniferous salts is performed in the presence of aluminum chloride so as to burn in up to 2 percent by weight aluminum oxide.

5. The slurry of Claim 1 or Claim 2, wherein the fines are derived from the hydrolysis of a titanium iron sulfate solution.

6. The slurry of Claim 5, wherein the resultant hydrolysate is calcined in the presence of an aluminum salt so as to burn in up to 2 percent by weight aluminum oxide.

7. The slurry of any preceding claim, wherein the solids content is 60 to 65 percent by weight.

8. The slurry of any preceding claim, wherein the desired solids content has been obtained by concentration of a diluter slurry of the fines by filtration or evaporation of the water.

## Patentansprüche

1. Wässrige Titandioxidpigmentaufschlämmung mit hoher Deckkraft, einem Feststoffgehalt von 55 bis 70 Gew.-% und einer effektiven Menge eines Dispergiermittels, dadurch gekennzeichnet, daß als Quelle für das Titandioxid feinteiliges Material verwendet wird, welches durch ein Sieb mit 325 Maschen/2,5 cm läuft und mit 0,3 bis 3 Gew.-% hydratisiertem Aluminiumoxid beschichtet ist, wobei das feinteilige Material erhalten wurde durch Naß-Vermahlung, gefolgt von einer Hydroklassierung des naßvermahlenen Materials ohne vorherige Trocknung oder vorheriges Mahlen im trockenen Zustand.

2. Aufschlämmung nach Anspruch 1, wobei bis zu 60% des feinteiligen Materials ersetzt ist durch getrocknetes und trocken gemahlenes Titandioxidpigment.

3. Aufschlämmung nach Anspruch 1 oder Anspruch 2, wobei das feinteilige Material durch Verbrennung von titanhaltigen Salzen erhalten wurde.

4. Aufschlämmung nach Anspruch 3, wobei die Verbrennung der titanhaltigen Salze in Gegenwart von Aluminiumchlorid durchgeführt wurde, so daß bis zu 2 Gew.-% Aluminiumoxid eingebrannt sind.

5. Aufschlämmung nach Anspruch 1 oder Anspruch 2, wobei das feinteilige Material bei der Hydrolyse einer Titan-Eisen-Sulfatlösung erhalten werde.

6. Aufschlämmung nach Anspruch 5, wobei das gebildete Hydrolysat in Gegenwart eines Aluminiumsalzes calziniert wurde, so daß bis zu 2 Gew.-% Aluminiumoxid eingebrannt sind.

7. Aufschlämmung nach einem der vorhergehenden Ansprüche, wobei der Feststoffgehalt 60 bis 65 Gew.-% beträgt.

8. Aufschlämmung nach einem der vorhergehenden Ansprüche, wobei der gewünschte Feststoffgehalt erhalten wurde durch Einengen einer verdünnten Aufschlämmung des feinteiligen Materials durch Filtrieren oder durch Verdampfen des Wassers.

**Revendications**

1. Dispersion de pigment de bioxyde de titane ayant un pouvoir opacifiant élevé, une teneur en matières solides de 55 à 70 pour-cent en poids et une quantité convenable d'un agent dispersant dans laquelle, l'amélioration consiste à utiliser comme source de bioxyde de titane des fines qui passent au travers d'un tamis de 325 mesh et qui sont revêtues de 0,3 à 3 pour-cent en poids d'oxyde d'aluminium hydraté, lesdites fines ayant été obtenues par un broyage à l'état humide, suivi d'une classification à l'eau du matériau broyé par voie humide sans séchage et broyage à sec.

2. Dispersion selon la revendication 1, dans laquelle jusqu'à 60 pour-cent de fines ont été remplacées par un pigment de bioxyde de titane séché et broyé à sec.

3. Dispersion selon la revendication 1 ou la revendication 2, dans laquelle les fines sont formées par la combustion de sels titanoferreux.

4. Dispersion selon la revendication 3, dans laquelle la combustion des sels titanoferreux est réalisée en présence de chlorure d'aluminium de façon à ''brûler'' jusqu'à 2 pour-cent en poids d'oxyde d'aluminium.

5. Dispersion selon la revendication 1 ou la revendication 2, dans laquelle les fines résultent de l'hydrolyse d'une solution de sulfate de titane et de fer.

6. Dispersion selon la revendication 5, dans laquelle l'hydrolysat résultant est calciné en présence d'un sel d'aluminium de façon à ''brûler'' jusqu'à 2 pour-cent en poids d'oxyde d'aluminium.

7. Dispersion selon l'une quelconque des revendications précédentes, dans laquelle la teneur en matières solides est de 60 à 65 pourcent en poids.

8. Dispersion selon l'une quelconque des revendications précédentes, dans laquelle la teneur désirée en matières solides a été obtenue par concentration d'une dispersion plus diluée des fines par filtration ou évaporation de l'eau.